# EUROPEAN PATENT SPECIFICATION

(11) **EP 2 722 146 B1**
(45) Date of publication and mention of the grant of the patent: **27.01.2021**
(21) Application number: 12799763.3
(22) Date of filing: 08.06.2012
(51) Int. Cl.: B29C 33/06, B29C 33/38, B29C 33/40, B29C 35/08, B29C 35/12

(54) **ELECTROMAGNETIC WAVE IRRADIATION MOLDING DEVICE AND ELECTROMAGNETIC WAVE IRRADIATION MOLDING METHOD**
VORRICHTUNG ZUR STRAHLFORMUNG ELEKTROMAGNETISCHER WELLEN UND VERFAHREN ZUR STRAHLFORMUNG ELEKTROMAGNETISCHER WELLEN
DISPOSITIF DE MOULAGE PAR IRRADIATION PAR ONDES ÉLECTROMAGNÉTIQUES ET PROCÉDÉ DE MOULAGE PAR IRRADIATION PAR ONDES ÉLECTROMAGNÉTIQUES

(30) Priority: 17.06.2011 JP 2011135411
(43) Date of publication of application: 23.04.2014
(73) Proprietor: micro-AMS Inc., Kawasaki City Kanagawa 213-0012 (JP)
(72) Inventor: KURIHARA, Fumio, Tokyo 105-0021 (JP)
(74) Representative: Kramer Barske Schmidtchen Patentanwälte PartG mbB
(86) International application number: PCT/JP2012/064770
(87) International publication number: WO 2012/173053

(56) References cited:
- WO-A1-2011/070998
- FR-A1- 2 190 582
- JP-A- 7 276 374
- JP-A- 2007 136 747
- JP-A- 2011 037 206
- US-A- 4 296 053
- US-A- 4 298 324
- US-A- 4 851 167
- US-A- 5 798 129

## Description

### TECHNICAL FIELD

The present invention relates to an electromagnetic wave irradiation molding apparatus according to claim 1 for forming a molded article by irradiating a thermoplastic resin in a mold with electromagnetic waves and an electromagnetic wave irradiation molding method using the apparatus. according to claims 3 and 4

### BACKGROUND ART

Examples of a method for obtaining a molded article formed in a predetermined shape using a thermoplastic resin generally include various molding methods such as injection molding, blow molding, extrusion molding, and press molding.

Except for these methods, for example, Patent Document 1 discloses a method in which, when filled in a cavity of a mold made of rubber, a thermoplastic resin is irradiated with electromagnetic waves having a wavelength of 0.01 m to 100 m from the surface of the mold. According to Patent Document 1, the thermoplastic resin is more strongly heated than the mold made of rubber due to the difference in physical properties between the rubber forming the mold and the thermoplastic resin.

Further, for example, Patent Document 2 discloses that a surface layer having the capability to absorb infrared rays is formed on the inner wall surface of the cavity of a rubber mold for heat-molding a thermoplastic resin composition by irradiation with electromagnetic waves including a wavelength region of 0.78 µm to 2 µm.

### PRIOR ART DOCUMENTS

### Patent Documents

Patent Document 1: JP-A-2007-136747
Patent Document 2: JP-A-2010-269541

US 4,298,324 A relates to a molding device for expansible plastic materials without usage of any vacuum means for reducing the capacity of a cavity.

US 4,851,167 A relates to a flow molding process and apparatus, wherein a vacuum in a cavity is provided to assist in material expansion, e.g., a vacuum action assists in helping a foam to rise into its final configuration.

FR 2 190 582 A relates to a molding process without the usage of vacuum means.

US 5,798129 A relates to a mold for prototype molding of an object in resin under reduced pressure without reducing a cavity into which liquid mold is filled.

WO 2011/070998 A1 relates to a method for molding thermoplastic resin molded articles.

### SUMMARY OF THE INVENTION

### PROBLEM TO BE SOLVED BY THE INVENTION

However, in Patent Document 1, there is a case where, depending on the type of thermoplastic resin used, electromagnetic waves with a wavelength of 0.01 m to 100 m are not effectively absorbed by the thermoplastic resin. Further, in Patent Document 2, electromagnetic waves with the wavelength region of 0.78 µm to 2 µm may be absorbed only by the surface layer so that the inner part of the thermoplastic resin is likely to be unable to be sufficiently heated.

Therefore, the mold and the rubber mold is not sufficient to stably form a molded article whose thickness greatly changes from part to part, a molded article having a complicated shape, or the like.

In view of the background, it is an object of the present invention to provide an electromagnetic wave irradiation molding apparatus and an electromagnetic wave irradiation molding method capable of stably forming a molded article whose thickness greatly changes from part to part, a molded article having a complicated shape, or the like in an excellent appearance and with a high dimensional accuracy.

### MEANS FOR SOLVING THE PROBLEM

One aspect of the present invention relates to an electromagnetic wave irradiation molding apparatus according to claim 1.

### EFFECTS OF THE INVENTION

The electromagnetic wave irradiation molding apparatus includes the mold and the electromagnetic wave irradiation means, and the surface layer having the capability to absorb specific electromagnetic waves is formed on at least part of the inner wall surface of the cavity.

When the thermoplastic resin molded article is formed, the thermoplastic resin is placed in the cavity and irradiated with specific electromagnetic waves including a wavelength region of 0.01 m to 100 m from the surface of the mold by the electromagnetic wave irradiation means. At this time, in the initial stage of irradiation, the specific electromagnetic waves are absorbed by the surface layer so that part of the thermoplastic resin near the surface layer is heated by heat conduction from the surface layer. At this time, depending on the type of the thermoplastic resin, the thermoplastic resin is melted, and a melted region expands on the thermoplastic resin from the part near the surface layer toward the inner part.

Particularly, when the thermoplastic resin has a property that its dielectric power factor is increased by heating, the heated thermoplastic resin itself starts to effectively absorb the specific electromagnetic waves. As a result, the thermoplastic resin itself produces heat so that the entire thermoplastic resin is more effectively heated, which makes it possible to melt the entire thermoplastic resin in a short time.

Therefore, the electromagnetic wave irradiation molding apparatus makes it possible to stably form a molded article whose thickness greatly changes from part to part, a molded article having a complicated shape, or the like in an excellent appearance and with a high dimensional accuracy.

### BRIEF DESCRIPTION OF THE DRAWINGS

Fig. 1 is an explanatory sectional front view showing a state in which a thermoplastic resin is placed in a cavity between a pair of mold parts located in an initial position according to an example;
Fig. 2 is an explanatory sectional side view showing a state in which the thermoplastic resin is placed in the cavity between a pair of the mold parts located in the initial position according to the example;
Fig. 3 is an explanatory sectional top view showing the configuration of a suction port and a plurality of suction gates in one of the rubber mold parts according to the example;
Fig. 4 is an explanatory sectional front view showing a state in which the thermoplastic resin irradiated with specific electromagnetic waves is melted so that a pair of the mold parts comes a little closer to each other according to the example;
Fig. 5 is an explanatory sectional front view showing a state in which the thermoplastic resin irradiated with the specific electromagnetic waves is melted so that a pair of the mold parts comes closest to each other according to the example;
Fig. 6 is an explanatory sectional front view of a molded article obtained according to the example;
Fig. 7 is an explanatory sectional view showing a state in which a function-imparted rubber material is applied to the surface of a mother die in a method for forming other mold part according to an example;
Fig. 8 is an explanatory sectional view showing a state in which the mother die with the function-imparted rubber material applied thereto and an auxiliary die are placed in a casting frame in the method for forming the other mold part according to the example;
Fig. 9 is an explanatory sectional view showing a state in which a rubber material is filled in the casting frame in the method for forming the other mold part according to the example;
Fig. 10 is an explanatory sectional view showing a state in which the mother die and the auxiliary die are placed in the casting frame and the rubber material is filled in the casting frame in another method for forming the other mold part according to an example;
Fig. 11 is an explanatory sectional view showing a state in which the mother die and the auxiliary die are released from the rubber material before the rubber material is cured completely, then a function-imparted rubber material is applied to the surface of the mother die, and the mother die is again placed in the rubber material in the another method for forming the other mold part according to the example;
Fig. 12 is an explanatory sectional view showing a state in which the mother die and the auxiliary die are placed in the casting frame according to the example;
Fig. 13 is an explanatory sectional view showing a state in which the rubber material is filled in the casting frame according to the example;
Fig. 14 is an explanatory sectional front view of another mold used according to an example, which is different from the mold shown in Fig. 1 in a position where the surface layer is provided;
Fig. 15 is an explanatory sectional front view of yet another mold according to an example, which is also different from the mold shown in Fig. 1 in a position where the surface layer is provided; and
Fig. 16 is a graph showing temperature changes in a surface layer and an ABS resin during heating in a verification test, in which a horizontal axis represents time and a vertical axis represents temperature.

### MODE FOR CARRYING OUT THE INVENTION

A preferred embodiment of the above-described electromagnetic wave irradiation molding apparatus will be described.

In the electromagnetic wave irradiation molding apparatus, the insulating material forming the mold may be one having insulation properties such as a rubber material or a ceramic material.

As a material for forming the surface layer, various materials may be used which absorb the specific electromagnetic waves including a wavelength region of 0.01 m to 100 m and produce heat by conversion of the energy of the absorbed specific electromagnetic waves into heat. The surface layer may be formed integrally with the cavity-forming portion of the mold parts when the plurality of the mold parts are formed. Alternatively, the surface layer may be attached or applied to the inner wall surface of the cavity between the mold parts after the mold parts are formed.

The surface layer may be formed by adding a dielectric property-imparting substance for imparting dielectric properties to rubber, resin, or ceramics. The surface layer may be a ceramic fired body containing the dielectric property-imparting substance. Alternatively, the surface layer may be formed by applying a slurry raw material of the surface layer to the inner wall surface of the cavity and drying and baking the slurry raw material of the surface layer.

The dielectric property-imparting substance to be used may be a substance having a dielectric power factor of 0.01 or higher.

It is preferred that a general portion of the mold is made of rubber and the surface layer is formed by adding the dielectric property-imparting substance to rubber. In this case, a molded article can be easily formed in the cavity of the mold even when the molded article has a complicated shape. Further, the use of rubber makes it easy to obtain the effect of uniformly heating the thermoplastic resin, independently of the position of the cavity. In addition, the use of rubber makes it easy to form the mold.

Further, the general portion made of rubber makes it possible to elastically deform the mold parts during heating by the electromagnetic wave irradiation molding apparatus. This makes it possible to reduce the capacity of the cavity. Further, there is a case where the flexibility of design of the mold parts can be increased and the molding accuracy of a thermoplastic resin can be increased.

Further, for example, when a large molded article is formed, the general portion made of rubber makes it possible to melt a thermoplastic resin little by little to gradually reduce the capacity of the cavity from part of the cavity where the mold parts face the melted thermoplastic resin. This makes it possible to stably spread the thermoplastic resin in the cavity between the mold parts without forming voids. In this case, it is possible to obtain a large molded article having a high density and an excellent appearance.

The entire mold may be made of rubber containing a dielectric property-imparting substance. However, in this case, thermal degradation by electromagnetic wave irradiation may be promoted. Further, in this case, it may be difficult to efficiently heat a thermoplastic resin, and the rate of cooling the thermoplastic resin filled in the cavity of the mold may be reduced. On the other hand, providing the surface layer in at least part of the mold is advantageous in terms of all these points.

The specific electromagnetic waves may be microwaves or high-frequency waves having a specific wavelength with the wavelength region of 0.01 m to 100 m.

As a thermoplastic resin for forming a molded article, various thermoplastic resins may be used. Particularly, in the electromagnetic wave irradiation apparatus, the surface layer has the property of absorbing the specific electromagnetic waves. Therefore, various types of thermoplastic resins whose dielectric power factor (tan δ), indicating the degree of ease of absorbing the specific electromagnetic waves, ranges from high to low levels may be used. As the thermoplastic resin, various thermoplastic resins such as not only colored ones (e.g., black) but also transparent or translucent ones may be used.

Some types of thermoplastic resins exhibit different values of dielectric power factor depending on temperature and frequency.

When the thermoplastic resin used is one having a high dielectric power factor, this thermoplastic resin can be heated and melted in a shorter time by irradiation with the specific electromagnetic waves. When the thermoplastic resin used is one having a property that its dielectric power factor increases as temperature increases, this thermoplastic resin can be heated and melted in a further shorter time by irradiation with the specific electromagnetic waves.

The electromagnetic wave irradiation molding apparatus includes vacuum means for evacuating an inside of the cavity, wherein:
the plurality of the mold parts is composed of a pair of mold parts, one of which, one mold part, has a fitting recess and the other of which, other mold part, has a fitting protrusion to be fitted into the fitting recess;
the cavity provided between the pair of the mold parts is closed at its entire periphery by the fitting protrusion fitted into the fitting recess; and
the pair of the mold parts is configured so as to come close to each other to reduce a capacity of the cavity by allowing the vacuum means to evacuate the inside of the cavity when the thermoplastic resin is melted by irradiation with the specific electromagnetic waves by the electromagnetic wave irradiation means.

In this case, a cavity whose capacity is larger than the volume of a molded article to be formed may be provided between a pair of the mold parts so that a molded article can be obtained by reducing the capacity of the cavity during melting of the thermoplastic resin. This makes it possible to reduce the amount of the thermoplastic resin used to form a molded article.

The one mold part may have a vacuum path for connecting the cavity to the vacuum means;
the surface layer may be formed on the inner wall surface of the cavity in the other mold part; and
the electromagnetic wave irradiation means may be configured so as to irradiate the specific electromagnetic waves to an external surface of the other mold part.

In this case, part of the thermoplastic resin in the cavity, which is located near the surface layer, is first melted. Therefore, part of the thermoplastic resin located on the side of the inner wall surface of the cavity where the vacuum path is connected is melted later, and therefore the vacuum path is less likely to be blocked with the melted thermoplastic resin.

A general portion of the plurality of the mold parts other than the surface layer is made of silicone rubber or fluoro rubber, and the surface layer is made of silicone rubber or fluoro rubber containing, as a dielectric property-imparting substance, 5 to 90 vol% of one or more of silicon carbide, ferrite, barium titanate, carbon black, and graphite.

In this case, the plurality of the mold parts are easily formed, and the surface layer is easily formed on the inner wall surface of the cavity between the plurality of the mold parts.

Further, in this case, the surface layer effectively absorbs the specific electromagnetic waves, and therefore the thermoplastic resin in the cavity can be heated and melted by heat conduction. In order to heat the surface layer to a higher temperature in a shorter time, the dielectric property-imparting substance content of the surface layer would be increased.

If the dielectric property-imparting substance content of the surface layer is less than 5 vol%, the surface layer may not be able to sufficiently exhibit the property of absorbing the specific electromagnetic waves. On the other hand, if the dielectric property-imparting substance content of the surface layer exceeds 90 vol%, it is difficult to mix the dielectric property-imparting substance with a material, except for the dielectric property-imparting substance, forming the surface layer, and the mechanical strength of the surface layer may be reduced.

The dielectric property-imparting substance content of the surface layer is preferably 10 vol% to 70 vol%, more preferably 13 vol% to 50 vol%, most preferably 15 vol% to 35 vol%. In this case, the surface layer more effectively absorbs the specific electromagnetic waves, and therefore the thermoplastic resin in the cavity can be heated and melted by heat conduction.

The dielectric property-imparting substance is not limited to the above-mentioned substances, and inorganic compounds, organic compounds, or mixtures of two or more of them may be used, or resins having a high dielectric power factor may also be used. Alternatively, the dielectric property-imparting substance may be an inorganic compound sintered body. The sintered body can be produced by a well-known method. When the sintered body is used as the dielectric property-imparting substance, for example, a silicon carbide content is preferably 50 vol% or more.

The use of the above-described electromagnetic wave irradiation molding apparatus makes it possible to achieve the following electromagnetic wave irradiation molding method.

The electromagnetic wave irradiation molding method is a method for performing molding using the electromagnetic wave irradiation molding apparatus, and the method includes the steps of:
placing a thermoplastic resin in the cavity;
heating the thermoplastic resin by irradiating the thermoplastic resin placed in the cavity with the specific electromagnetic waves including a wavelength region of 0.01 m to 100 m by the electromagnetic wave irradiation means through the mold; and
cooling the thermoplastic resin to obtain a molded article.

In this case, a thermoplastic resin molded article can be formed in the cavity through the placing step, the heating step, and the cooling step.

Further, the use of the above-described electromagnetic wave irradiation molding apparatus makes it possible to achieve the following electromagnetic wave irradiation molding method.

The electromagnetic wave irradiation molding method is a method for performing molding using the electromagnetic wave irradiation molding apparatus, and the method includes the steps of:
placing a particulate or solid thermoplastic resin in the cavity,
heating the thermoplastic resin by irradiating the thermoplastic resin placed in the cavity with the specific electromagnetic waves including a wavelength region of 0.01 m to 100 m by the electromagnetic wave irradiation means through the mold, and
cooling the thermoplastic resin to obtain a molded article, wherein
when the heating step is performed after the placing step, the inside of the cavity is evacuated by the vacuum means so that a pair of the mold parts comes close to each other when the thermoplastic resin is melted by irradiation with the specific electromagnetic waves by the electromagnetic wave irradiation means to form a molded article of the thermoplastic resin in the cavity having a reduced capacity.

In this case, when the particulate or solid thermoplastic resin is melted in the heating step, the volume of the thermoplastic resin occupying the cavity is reduced. At this time, the inside of the cavity is evacuated by the vacuum means, and therefore a pair of the mold parts comes close to each other just as much as the volume of the thermoplastic resin is reduced. Then, the molded article of the thermoplastic resin can be formed in the cavity having the reduced capacity. This makes it possible to form a molded article stably while reducing the amount of the thermoplastic resin used. Further, the molded article has improved surface appearance and dimensional accuracy.

### EXAMPLES

Hereinbelow, the electromagnetic wave irradiation molding apparatus and the electromagnetic wave irradiation molding method will be described based on examples with reference to the accompanying drawings.

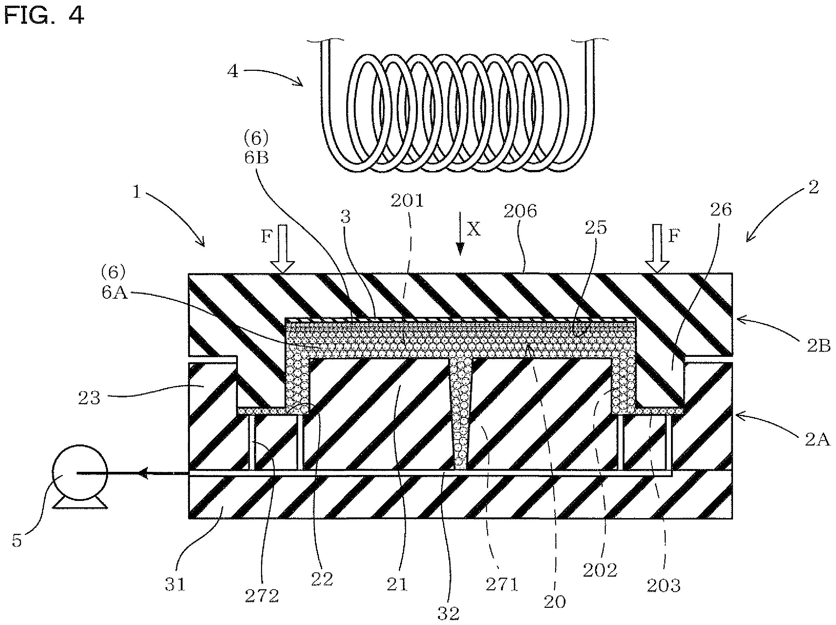

As shown in Fig. 4, an electromagnetic wave irradiation molding apparatus 1 of this example includes: a mold 2 made of an insulating material; and an electromagnetic wave irradiation means 4 for irradiating specific electromagnetic waves X including a wavelength region of 0.01 m to 100 m. The mold 2 is separated into mold parts 2A and 2B, and a cavity 20 to be filled with a thermoplastic resin 6 to form a molded article 7 is provided between the mold parts 2A and 2B (in an area where the mold parts 2A and 2B face each other) . A surface layer 3 having the capability to absorb the specific electromagnetic waves X is provided on at least part of the inner wall surface of the cavity 20.

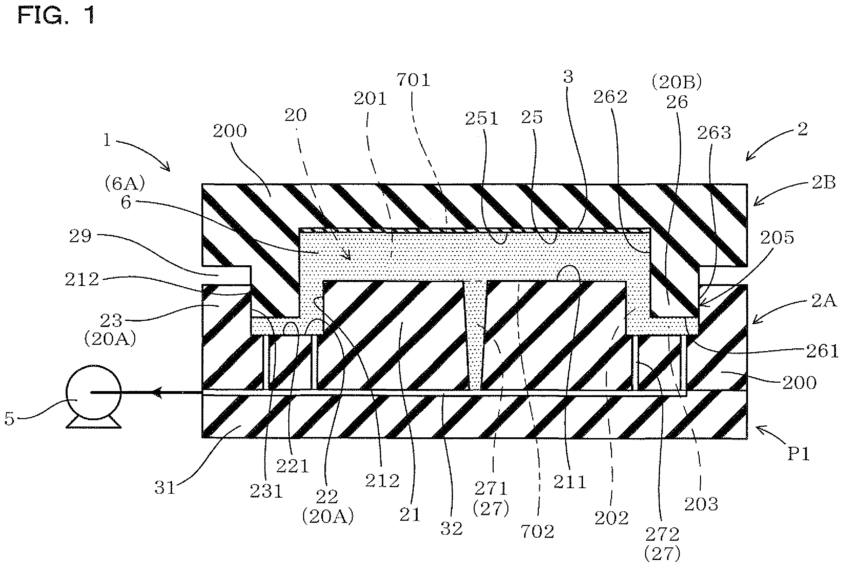

Hereinbelow, the electromagnetic wave irradiation molding apparatus 1 and the electromagnetic wave irradiation molding method of this example will be described in detail with reference to Figs. 1 to 16.

First, the figures to be referenced in this example will be described.

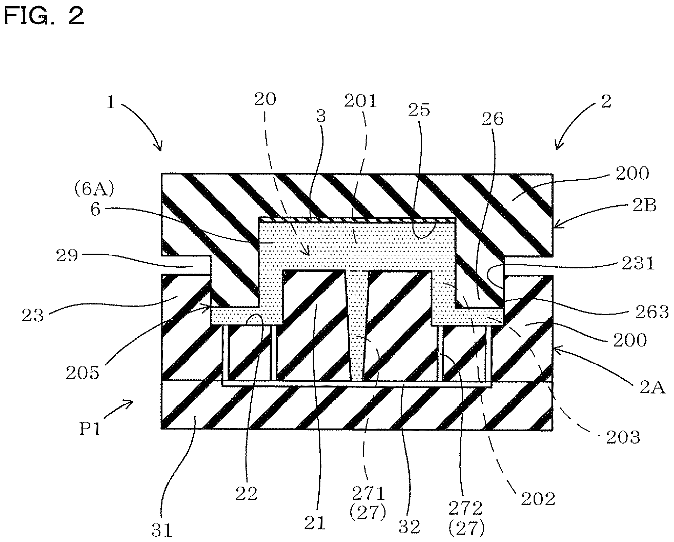

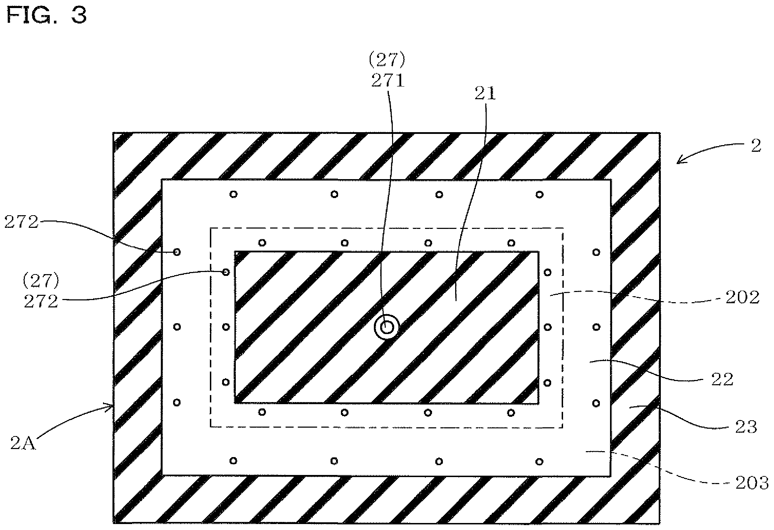

Fig. 1 is a sectional front view showing a state in which the thermoplastic resin 6 is placed in the cavity 20 between a pair of the mold parts 2A and 2B located in an initial position P1. Fig. 2 is a sectional side view (viewed from a direction orthogonal to Fig. 1) showing a state in which the thermoplastic resin 6 is placed in the cavity 20 between a pair of the mold parts 2A and 2B located in the initial position P1. Fig. 3 is a sectional top view showing the configuration of a suction port 271 and a plurality of suction gates 272 in the one rubber mold part 2A.

Fig. 4 is a sectional front view showing a state in which the thermoplastic resin 6 irradiated with the specific electromagnetic waves X is melted so that a pair of the mold parts 2A and 2B comes a little closer to each other.

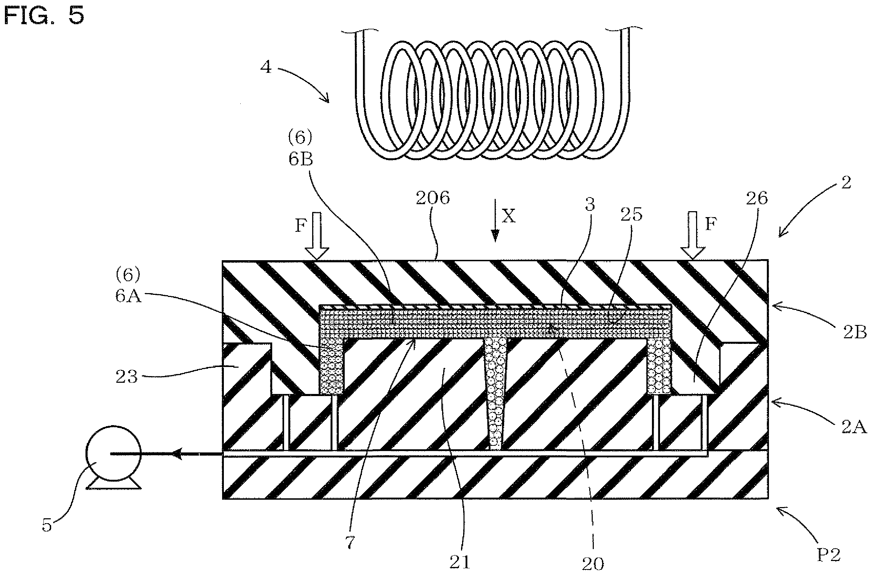

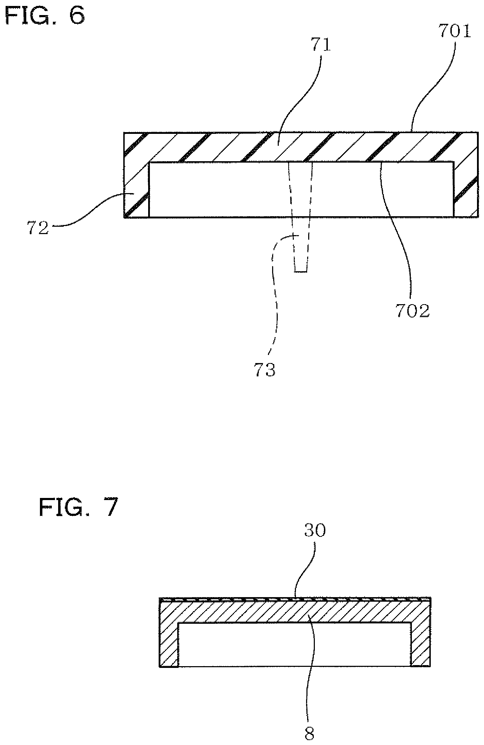

Fig. 5 is a sectional front view showing a state in which the thermoplastic resin 6 irradiated with the specific electromagnetic waves X is melted so that a pair of the mold parts 2A and 2B comes closest to each other and is located in a close position P2. Fig. 6 is a sectional front view of the molded article 7.

### (Structure of molded article 7)

As shown in Fig. 6, the molded article 7 formed by the electromagnetic wave irradiation molding apparatus 1 of this example is constituted from a main body 71 and a standing wall 72 that stands substantially perpendicularly or obliquely in the main body 71. The standing wall 72 of this example is configured to stand on the entire outer edge of the main body 71. Alternatively, the molded article 7 may be one in which the standing wall 72 stands substantially perpendicularly or obliquely in an appropriate part of the main body 71. Further, the molded article 7 can be obtained by cutting a molded portion 73 formed in the suction port 271 that will be described later.

### (Structure of mold 2)

As shown in Figs. 1 and 2, the mold parts 2A and 2B of this example are formed as a pair. The one mold part 2A has a fitting recess 20A, and the other mold part 2B has a fitting protrusion 20B to be fitted into the fitting recess 20A. The cavity 20 provided between a pair of the mold parts 2A and 2B is closed at its entire periphery by the fitting protrusion 20B fitted into the fitting recess 20A.

The fitting recess 20A of this example is constituted from an annular fitting recess 22 and an annular outer peripheral protrusion 23 in the one mold part 2A. The fitting protrusion 20B of this example is constituted from an annular inner peripheral protrusion 26 in the other mold part 2B.

The one mold part 2A, which is one of a pair of the mold parts 2A and 2B, has a cavity-forming protrusion 21 that forms a back surface 702 of the molded article 7 and the annular outer peripheral protrusion 23 that protrudes so as to surround the entire periphery of the cavity-forming protrusion 21. Between the cavity-forming protrusion 21 and the annular outer peripheral protrusion 23, the annular fitting recess 22 is provided.

The other mold part 2B, which is the other of a pair of the mold parts 2A and 2B, has a cavity-forming recess 25 on the inner side of which the cavity-forming protrusion 21 is placed and which forms a design surface 701 of the molded article 7, and the annular inner peripheral protrusion 26 formed so as to protrude from the entire periphery of the cavity-forming recess 25. The annular inner peripheral protrusion 26 is fitted to an inner peripheral surface 231 of the annular outer peripheral protrusion 23 to be placed in the annular fitting recess 22.

As shown in Figs. 1 and 2, an outer peripheral surface 263 of the annular inner peripheral protrusion 26 in the other mold part 2B is fitted to the inner peripheral surface 231 of the annular outer peripheral protrusion 23 when a pair of the mold parts 2A and 2B is located in the initial position P1, that is, before a pair of the mold parts 2A and 2B is brought close to each other. A parting surface 205 formed between a pair of the mold parts 2A and 2B is entirely closed by the outer peripheral surface 263 of the annular inner peripheral protrusion 26 and the inner peripheral surface 231 of the annular outer peripheral protrusion 23 before and after a pair of the mold parts 2A and 2B is brought close to each other.

Fitting of the outer peripheral surface 263 of the annular inner peripheral protrusion 26 in the other mold part 2B to the inner peripheral surface 231 of the annular outer peripheral protrusion 23 in the one mold part 2A makes it possible to easily prevent the leakage of the melted thermoplastic resin 6 through a gap 29 on the parting surface 205 caused by bringing a pair of the mold parts 2A and 2B close to each other.

As shown in Figs. 1 and 2, the cavity 20 of this example is continuously formed to extend between an end surface 211 of the cavity-forming protrusion 21 and a bottom surface 251 of the cavity-forming recess 25, between an outer peripheral surface 212 of the cavity-forming protrusion 21 and an inner peripheral surface 262 of the annular inner peripheral protrusion 26, and between a bottom surface 221 of the annular fitting recess 22 and an end surface 261 of the annular inner peripheral protrusion 26 when a pair of the mold parts 2A and 2B is in the initial position P1, that is, before a pair of the mold parts 2A and 2B is brought close to each other.

As shown in Fig. 5, a pair of the mold parts 2A and 2B is configured to come close to each other until, when the thermoplastic resin 6 placed in the cavity 20 is melted, the bottom surface 221 of the annular fitting recess 22 in the one mold part 2A and the end surface 261 of the annular inner peripheral protrusion 26 in the other mold part 2B abut against each other.

When a pair of the mold parts 2A and 2B comes close to each other to form the molded article 7 in the cavity 20, the thermoplastic resin 6 is supplied from a main space 201 formed between the cavity-forming protrusion 21 and the cavity-forming recess 25 and a surplus space 203 formed between the bottom surface 221 of the annular fitting recess 22 and the end surface 261 of the annular inner peripheral protrusion 26, to a standing wall space 202 formed between the outer peripheral surface 212 of the cavity-forming protrusion 21 and the inner peripheral surface 262 of the annular inner peripheral protrusion 26. Further, in Figs. 4 and 5, the particulate thermoplastic resin is denoted by reference number 6A and the melted thermoplastic resin is denoted by reference number 6B.

### (Structure of electromagnetic wave irradiation means 4)

As the electromagnetic wave irradiation means 4, one that irradiates microwaves (with a wavelength of 0.01 m to 1 m) or high-frequency waves (with a wavelength of 1 m to 100 m) may be used. Further, the wavelength of microwaves used in the electromagnetic wave irradiation means 4 ranges from 0.01 m to 1 m, which corresponds to a frequency range of about 30 GHz to about 300 MHz, and the wavelength of high-frequency waves used in the electromagnetic wave irradiation means 4 ranges from 1 m to 100 m, which corresponds to a frequency range of about 300 MHz to about 3 MHz.

Generally, electromagnetic waves (high-frequency waves) with a frequency of about 13.56 MHz (about 22.1 m), 27.12 MHz (about 11.1 m), 40.18 MHz (7.46 m), or 2450 MHz (about 0.122 m) are often used in accordance with laws and regulations concerning electromagnetic leakage.

The wavelength of the specific electromagnetic waves X used in the electromagnetic wave irradiation means 4 can be arbitrarily selected from wavelengths of 0.01 m to 100 m, depending on the type of the thermoplastic resin 6 used for forming the molded article 7, the shape of the molded article 7, the material and shape of the mold 2, the material and thickness of the surface layer 3, the type of inorganic compound powder added to the surface layer 3, or the like.

The electromagnetic wave irradiation means 4 of this example preferably uses microwaves with a frequency of 1000 MHz (wavelength: 0.3m) to 10 GHz (wavelength: 0.03m) for the reason that the molded article 7 can have a high degree of flexibility in shape, sparking is less likely to occur, and electromagnetic leakage can be easily prevented. Particularly, the electromagnetic wave irradiation means 4 of this example more preferably uses a frequency of about 2450 MHz.

Further, as the electromagnetic wave irradiation means 4, one whose rated output is 100 W to 15000 W can be used, and one whose rated output is 500 W to 3000 W is more preferably used.

### (Structure of vacuum means 5)

As shown in Fig. 1, the electromagnetic wave irradiation molding apparatus 1 of this example includes, in addition to a pair of the mold parts 2A and 2B and the electromagnetic wave irradiation means 4, a vacuum means 5 for evacuating the inside of the cavity 20. The vacuum means 5 is a pump connected to a pair of the mold parts 2A and 2B, and is configured to evacuate the inside of the cavity 20, in which the thermoplastic resin 6 is placed, to produce a vacuum in the cavity 20. As shown in Figs. 4 and 5, the electromagnetic wave irradiation molding apparatus 1 is configured so as to make a pair of the mold parts 2A and 2B come close to each other when the thermoplastic resin 6 is melted, by generating a suction force (mold clamping force) F to the pair of the mold parts 2A and 2B allowing the pressure in the cavity 20 to be lower than the pressure outside the pair of the mold parts 2A and 2B.

As shown in Figs. 1 and 2, the one mold part 2A has a vacuum path 27 for connecting the cavity 20 to the vacuum means 5. The vacuum path 27 is formed so that the cavity 20 communicates with an external surface of the one mold part 2A. The surface layer 3 is formed on the inner wall surface of the cavity 20 in the other mold part 2B.

As shown in Figs. 4 and 5, the electromagnetic wave irradiation means 4 is configured to irradiate the specific electromagnetic waves X to an external surface 206 of the other mold part 2B. The specific electromagnetic waves X emitted from the electromagnetic wave irradiation means 4 are irradiated to the surface layer 3 formed on the inner wall surface of the cavity 20 in the other mold part 2B, and the thermoplastic resin 6 in the cavity 20 is heated by the surface layer 3.

A pair of the mold parts 2A and 2B is configured so as to come close to each other to reduce a capacity of the cavity 20 by allowing the vacuum means 5 to evacuate the inside of the cavity 20 when the thermoplastic resin 6 is melted by irradiation with the specific electromagnetic waves X by the electromagnetic wave irradiation means 4.

Further, the electromagnetic wave irradiation means 4 may be configured to irradiate the specific electromagnetic waves X to the external surface of the one mold part 2A, instead of irradiating the specific electromagnetic waves X to the external surface 206 of the other mold part 2B. Alternatively, the electromagnetic wave irradiation means 4 may be configured to irradiate the specific electromagnetic waves X to both the external surface 206 of the other mold part 2B and the external surface of the one mold part 2A.

### (Structure for evacuation)

As shown in Figs. 1 and 2, in the one mold part 2A, the suction port 271 and suction gates 272 are formed as the vacuum path 27 so as to penetrate the one mold part 2A. The suction port 271 is an opening extending from the external surface of the one mold part 2A to the end surface 211 of the cavity-forming protrusion 21. The suction gates 272 are openings extending from the external surface of the one mold part 2A to the bottom surface 221 of the annular fitting recess 22. The suction port 271 of this Example also serves as an input port for inputting the particulate thermoplastic resin 6A into the cavity 20. Further, the suction port 271 may serve as a space, into which the excess melted thermoplastic resin 6B overflows from the main space 201, when the particulate thermoplastic resin 6A placed in the main space 201 is melted.

As described above, the molded article 7 formed in this example is one in which the standing wall 72 stands substantially perpendicularly or obliquely on the entire periphery of the main body 71. As shown in Fig. 3, the suction gates 272 are formed as openings on the four sides of the rectangular and annular bottom surface 221 of the annular fitting recess 22 in positions facing the bottom surface 251 of the cavity-forming recess 25 and positions facing the annular inner peripheral protrusion 26. Further, Fig. 3 shows the configuration of the suction port 271 and the plurality of the suction gates 272 in the one mold part 2A.

As shown in Figs. 1 and 2, the suction gates 272 are smaller in flow path cross-sectional area than the suction port 271 so that the particulate thermoplastic resin 6A in the cavity 20 is not sucked when gas (air) in the cavity 20 is sucked by the vacuum means 5.

A back-up plate 31 is stacked on the one mold part 2A on the side opposite to the other mold part 2B. Between the one mold part 2A and the back-up plate 31, an evacuation path 32 for evacuation by the vacuum means 5 is formed. The evacuation path 32 communicates with the suction port 271 and the plurality of the suction gates 272.

Further, as shown in Figs. 4 and 5, the electromagnetic wave irradiation means 4 of this example is provided so as to face the external surface 206 formed parallel to the bottom surface 251 of the cavity-forming recess 25 in the other mold part 2B. In the electromagnetic wave irradiation molding apparatus 1, the particulate thermoplastic resin 6A placed in the cavity 20 is first melted from the cavity-forming recess 25 side by irradiating the external surface 206 of the other mold part 2B with the specific electromagnetic waves X. Then, evacuation by the vacuum means 5 is continued until the entire cavity 20 is filled with the melted thermoplastic resin 6B while the suction gates 272 are prevented from being blocked.

### (Structure of surface layer 3)

As shown in Figs. 1 and 2, a general portion 200 of each of the mold parts 2A and 2B is made of silicone rubber that is a rubber material 209 as the insulating material. The surface layer 3 of this Example is formed only on the inner wall surface forming the cavity 20 in the other mold part 2B. The surface layer 3 is not formed on the inner wall surface forming the cavity 20 in the one mold part 2A. The surface layer 3 of this example is made of silicone rubber, which is a base material, containing 5 to 90 vol% of a dielectric property-imparting substance whose dielectric power factor at 30°C and 60 Hz is 0.01 or higher.

The surface layer 3 of this Example is formed integrally with the general portion 200 made of silicone rubber by bonding. The dielectric property-imparting substance used in this example is silicon carbide.

More specifically, the dielectric property-imparting substance used in this example is silicon carbide NC#1000 (50% average particle diameter (weight basis) : 11 µm) manufactured by Pacific Rundum Co., Ltd. Further, the surface layer 3 of this example is made of silicone rubber, which is a rubber material, containing 25.7 vol% of silicon carbide as a dielectric property-imparting substance.

Further, the dielectric property-imparting substance to be used may be ferrite, barium titanate, carbon black, or graphite.

The dielectric property-imparting substance to be used may be an inorganic compound powder of silicon carbide. As such an inorganic compound powder, one having a 50% average particle diameter (weight basis) of 3 µm to 800 µm may be used. The average particle diameter of the inorganic compound powder may be preferably 4 µm to 500 µm, more preferably 5 µm to 300 µm, even more preferably 6 µm to 100 µm, particularly preferably 7 µm to 50 µm. If the average particle diameter of the inorganic compound powder is less than 3 µm, the heat generation efficiency of the surface layer 3 at the time of irradiation with the specific electromagnetic waves X may be reduced. On the other hand, if the average particle diameter of the inorganic compound powder exceeds 800 µm, it may be difficult to mix the inorganic compound powder with the base material of the surface layer 3 and therefore the strength of the surface layer 3 may be reduced.

The dielectric property-imparting substance content of the surface layer 3 may be 5 vol% to 90 vol% with respect to the total volume of the surface layer 3. The dielectric property-imparting substance content may be preferably 10 vol% to 70 vol%, more preferably 13 vol% to 50 vol%, particularly preferably 15 vol% to 35 vol%.

If the dielectric property-imparting substance content is less than 5 vol%, the capability of the surface layer 3 to absorb the specific electromagnetic waves X is insufficient. Further, in this case, the heat generation efficiency of the surface layer 3 at the time of irradiation with the specific electromagnetic waves X is reduced, and therefore it is difficult to heat the thermoplastic resin 6 in a short time. In addition, the thermoplastic resin 6 in the cavity 20 is likely to be locally heated. On the other hand, if the dielectric property-imparting substance content exceeds 90 vol%, it is difficult to mix the dielectric property-imparting substance with the base material of the surface layer 3, and therefore the mechanical strength of the surface layer 3 is reduced. Further, in this case, sparking may be likely to occur inside or on the surface of the surface layer 3 at the time of irradiation with the specific electromagnetic waves X.

The base material of the surface layer 3 and the general portion 200 of the mold parts 2A and 2B may be formed of a material such as fluoro rubber other than silicone rubber. As the base material and the material of the general portion 200, various insulating materials may be used which can disperse and hold an inorganic compound powder as a dielectric property-imparting substance and have heat resistance to withstand operating temperature. For example, the base material and the material of the general portion 200 may be resin, ceramics or the like.

The thickness of the surface layer 3 may be 0.1 mm to 10 mm. The thickness of the surface layer 3 may be preferably 0.5 mm to 8 mm, more preferably 2 mm to 7 mm.

### (Method for forming mold parts 2A and 2B)

The other mold part 2B having the surface layer 3 may be formed in the following manner.

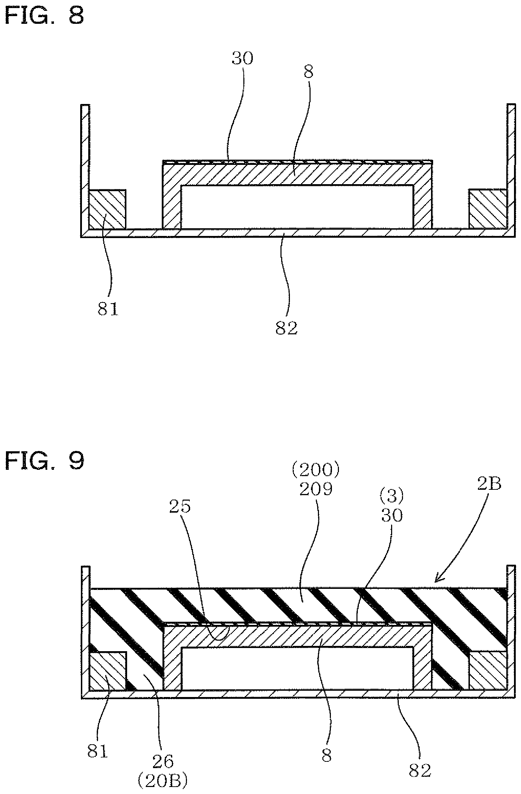

First, as an applying and placing step, as shown in Fig. 7, a function-added rubber material 30 containing a substance whose dielectric power factor is 0.01 or higher is applied to the surface of a mother die 8 having a product shape. The function-added rubber material 30 is put on the surface of the mother die 8 and an applicator (e.g., a waste, a brush) and is spread as uniformly as possible on the surface of the mother die 8. Then, as shown in Fig. 8, the mother die 8 having the function-added rubber material 30 applied thereto and an auxiliary die 81 for forming the fitting protrusion 20B are placed in a casting frame 82.

Then, when the function-added rubber material 30 applied to the mother die 8 reaches a predetermined semi-cured state before complete cure, as shown in Fig. 9, as a filling step, the rubber material 209 is filled in the casting frame 82. Then, as a molding step, the rubber materials 30 and 209 are kept cooled until they are cured, to form the surface layer 3 made of the function-added rubber material 30, onto which the surface shape of the mother die 8 has been transferred, and the general portion 200 made of the rubber material 209 so that the other mold part 2B is obtained. Further, the fitting protrusion 20B is formed by the auxiliary die 81. Thereafter, as a releasing step, the mother die 8 and the auxiliary die 81 are released from the other mold part 2B.

In this way, the other mold part 2B having the surface layer 3 can be formed.

Alternatively, the other mold part 2B may also be formed in the following manner.

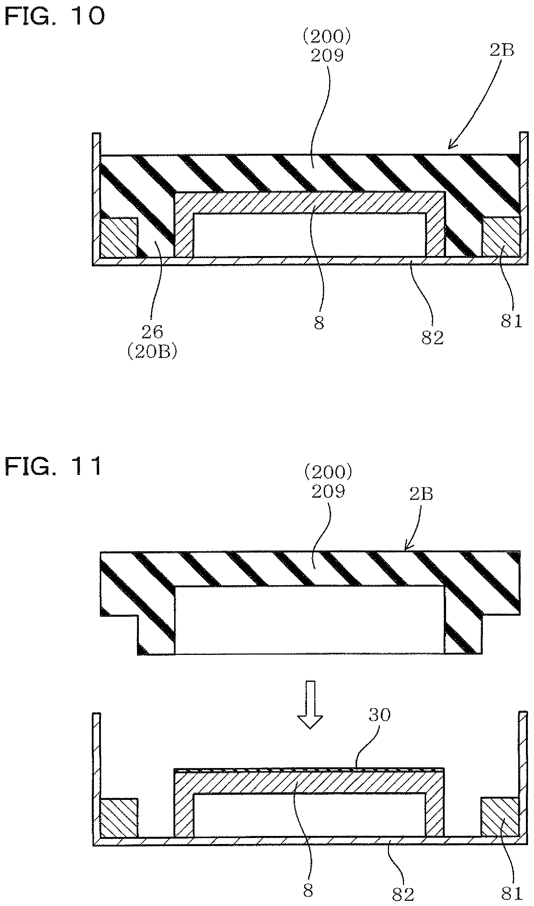

First, as a filling step, as shown in Fig. 10, the mother die 8 having a product shape and the auxiliary die 81 for forming the fitting protrusion 20B are placed in the casting frame 82, and the rubber material 209 is filled in the casting frame 82. Then, as a releasing step, as shown in Fig. 11, the mother die 8 and the auxiliary die 81 are released from the rubber material 209 before complete cure. Then, as an applying and placing step, the function-added rubber material 30 containing a substance whose dielectric power factor is 0.01 or higher is applied to at least one of the surface of the mother die 8 and the inner surface of the rubber material 209 onto which the surface shape of the mother die 8 has been transferred. Then, the mother die 8 is again placed in the rubber material 209 in a predetermined semi-cured state before complete cure.

Then, as a molding step, the surface layer 3 made of the function-added rubber material 30 is formed onto which the surface shape of the mother die 8 has been transferred, and the general portion 200 made of the rubber material 209 is formed so that the rubber mold is formed. Then, as a re-releasing step, the mother die 8 is again released from the rubber mold.

In this way, the other mold part 2B having the surface layer 3 can be formed.

The function-added rubber material 30 used in this example is one obtained by adding an inorganic compound powder as a dielectric property-imparting substance during mixing of silicone as a main agent and a curing agent.

When a thermoplastic resin is used as a material for forming the surface layer 3, an inorganic compound powder as a dielectric property-imparting substance is kneaded during kneading the thermoplastic resin. When a material for forming the surface layer 3 is used as a coating material, an inorganic compound powder as a dielectric property-imparting substance is kneaded during preparing the coating material.

Further, the surface layer 3 may be formed by integral molding with the general portion 200, but various other methods may be used to form the surface layer 3. For example, the surface layer 3 may be formed by applying a material for forming the surface layer 3 to the inner wall surface of the cavity 20. Alternatively, the surface layer 3 may be formed by attaching a sheet-shaped surface layer to the inner wall surface of the cavity 20.

On the other hand, the one mold part 2A constituted from only the general portion 200 may be formed in the following manner.

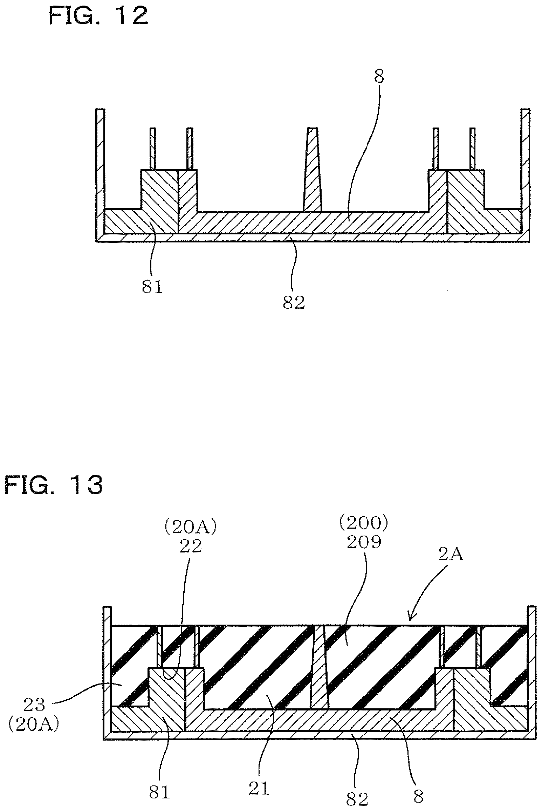

First, as a placing step, as shown in Fig. 12, the mother die 8 having a product shape and the auxiliary die 81 for forming the fitting recess 20A are placed in the casting frame 82. Then, as a filling step, as shown in Fig. 13, the rubber material 209 is filled in the casting frame 82. Then, as a molding step, the rubber material 209 is kept cooled until it is cured to form the general portion 200 onto which the surface shape of the mother die 8 has been transferred, so that the one mold part 2A is formed. The fitting recess 20A is formed by the auxiliary die 81. Then, as a releasing step, the mother die 8 and the auxiliary die 81 are released from the other mold part 2B.

In this way, the one mold part 2A can be formed.

### (Structure of thermoplastic resin 6)

As the thermoplastic resin 6 for forming the molded article 7, a particulate thermoplastic resin may be used alone. Alternatively, as the thermoplastic resin 6, a particulate thermoplastic resin and a solid thermoplastic resin may be used in combination. In this case, a solid thermoplastic resin is placed in part of the cavity 20, and a particulate thermoplastic resin is placed in the remaining part of the cavity 20.

Here, "particulate" refers to a spherical shape, a cylindrical shape, an indeterminate shape in a crushed product, or the like. The "solid" refers to a plate shape, a bar shape, a linear shape, or the like, and the shape of a solid thermoplastic resin can be appropriately selected depending on a desired shape of the molded article 7. The particulate thermoplastic resin 6 to be used may be a mixture of two or more thermoplastic resins different in shape. The solid thermoplastic resin 6 to be used may be a mixture of two or more thermoplastic resins different in shape.

The volume average particle diameter of the particulate thermoplastic resin 6 may be 1 µm to 3000 µm. The particle diameter may be preferably 50 µm to 3000 µm, more preferably 200 µm to 2500 µm. Further, it is preferred that the particulate thermoplastic resin 6 has an average particle diameter within the above range and, in addition, contains small particles having a particle diameter of 1 µm to 100 µm. In this case, the particulate thermoplastic resin 6 can be smoothly filled in the entire cavity 20.

Further, the bulk specific gravity of the particulate thermoplastic resin 6 may be 0.4 or higher. The bulk specific gravity may be preferably 0.45 or higher, more preferably 0.5 or higher.

Further, depending on purpose or intended use, the thermoplastic resin 6 may contain an additive such as a fibrous, particulate, or sheet-shaped filler, a decorating agent such as a metallic pigment, an ultraviolet absorbing agent, an antioxidant, an anti-aging agent, an antistatic agent, a flame retardant, a weathering agent, a plasticizer, a lubricant, an antimicrobial agent, a hydrophilicity-imparting agent, or a pale-color coloring agent.

As the thermoplastic resin 6 for forming the molded article 7, various types of thermoplastic resins may be used. When the thermoplastic resin 6 to be used is one having polarity, this thermoplastic resin 6 can be heated and melted in a shorter time by irradiation with the specific electromagnetic waves X. When the thermoplastic resin 6 to be used is one having a property that its dielectric power factor increases as temperature increases, this thermoplastic resin 6 can be heated and melted in a shorter time by irradiation with the specific electromagnetic waves X.

Table 1 shows the dependence of the dielectric power factor (tan δ) on frequency for various thermoplastic resins used as the thermoplastic resin 6. In Table 1, the values of dielectric power factor at 30°C are shown.

From Table 1, it is considered that vinyl chloride has a property that its dielectric power factor increases as frequency increases.

### (Table 1)

**Table 1**

| Resin | 60Hz | 1kHz | 1MHz |
|---|---|---|---|
| Vinyl chloride | 0.02 | 0.017 | 0.04 |
| Polyethylene | less than 0.0005 | | |
| Polypropylene | 0.0003 | | |
| Polystyrene | 0.0003 | | |

Table 2 shows the dependence of the dielectric power factor (tan δ) on temperature for various thermoplastic resin 6. In Table 2, the values of dielectric power factor at 60 Hz are shown.

From Table 2, it is considered that vinyl chloride, polyamide, and ABS (acrylonitrile butadiene styrene) have a property that their dielectric power factors increase as their temperature increases.

### (Table 2)

**Table 2**

| Resin | 30°C | 90°C | 140°C |
|---|---|---|---|
| Vinyl chloride | 0.02 | 0.08 | 0.33 |
| Polyethylene | less than 0.0005 | | |
| Polypropylene | 0.0003 | | |
| Polyamide | 0.005 | 0.05 | - |
| ABS | 0.005 | 0.01 | - |

Hereinbelow, an electromagnetic wave irradiation molding method using the electromagnetic wave irradiation molding apparatus 1 and functions and effects of this example will be described.

First, as a placing step, as shown in Figs. 1 and 2, the particulate thermoplastic resin 6A is placed in the cavity 20 provided between a pair of the mold parts 2A and 2B. At this time, the thermoplastic resin 6A can be inputted into the cavity 20 between a pair of the mold parts 2A and 2B which is joined together through the suction port (input port) 27 formed in the one mold part 2A. Alternatively, the thermoplastic resin 6A may be placed in the cavity-forming recess 25 in the other mold part 2B in an open state. In this case, a pair of the mold parts 2A and 2B is joined together in a state where the thermoplastic resin 6A is placed between the pair.

Particularly, when the solid thermoplastic resin 6 is used, a pair of the mold parts 2A and 2B can be joined together after the thermoplastic resin 6 is placed in the cavity-forming recess 25 or on the cavity-forming protrusion 21. The particulate thermoplastic resin 6 and the solid thermoplastic resin 6 may be used in combination.

Further, as shown in Figs. 1 and 2, in a state where a pair of the mold parts 2A and 2B is joined together, the parting surface 205 formed between a pair of the mold parts 2A and 2B is entirely closed by the inner peripheral surface 231 of the annular outer peripheral protrusion 23 in the one mold part 2A and the outer peripheral surface 263 of the annular inner peripheral protrusion 26 in the other mold part 2B.

Then, as a heating step, as shown in Fig. 1, the vacuum means 5 starts evacuation of the inside of the cavity 20 through the evacuation path 32, the suction port 271, and the plurality of the suction gates 272. At this time, air in gaps formed between the particles of the particulate thermoplastic resin 6A in the cavity 20 is sucked, so that a suction force F that tries to bring a pair of the mold parts 2A and 2B close to each other is applied to them, and therefore pressure is applied between the particles of the particulate thermoplastic resin 6A.

Then, as shown in Fig. 4, the external surface 206 of the other mold part 2B is irradiated with the specific electromagnetic waves X with a wavelength region of 0.01 m to 100 m by the electromagnetic wave irradiation means 4 while evacuation by the vacuum means 5 is continued. At this time, in the initial stage of irradiation with the specific electromagnetic waves X, many of the specific electromagnetic waves X pass through the general portion 200 of the other mold part 2B and are absorbed by the surface layer 3 provided on the inner wall surface of the cavity 20 in the other mold part 2B.

Then, part of the particulate thermoplastic resin 6A located near the surface layer 3 is heated and melted by heat conduction from the surface layer 3. Then, a melted region expands on the particulate thermoplastic resin 6A from the part near the surface layer 3 toward the inner part.

Particularly, when the thermoplastic resin 6 has a property that its dielectric power factor is increased by heating and melting, the melted thermoplastic resin 6B itself starts to effectively absorb the specific electromagnetic waves X. This makes it possible to more effectively heat the entire thermoplastic resin 6 and therefore to melt the entire thermoplastic resin 6 in a shorter time.

Further, the particulate thermoplastic resin 6A is released from a force, which is applied between the particles of the particulate thermoplastic resin 6A due to a vacuum created in the gaps between the particles, by melting the particulate thermoplastic resin 6A. Then, the capacity of the main space 201 is reduced by the suction force F applied to a pair of the mold parts 2A and 2B, so that a pair of the mold parts 2A and 2B comes close to each other just as much as the capacity of the main space 201 is reduced.

The evacuation of the inside of the cavity 20 by the vacuum means 5 is continued even after the thermoplastic resin 6A in the cavity 20 starts to melt.

As shown in Fig. 5, when the particulate thermoplastic resin 6A is melted, the particles located near the bottom surface 251 of the cavity-forming recess 25 in the main space 201 of the cavity 20 are first melted, and then the melting gradually proceeds until the particles located near the end surface 211 of the cavity-forming protrusion 21 are melted. The particulate thermoplastic resin 6A placed in the standing wall space 202 and the surplus space 203 in the cavity 20 is kept in a particle state without melting until almost the entire particulate thermoplastic resin 6A placed in the main space 201 is melted. This makes it possible to continue the evacuation of the main space 201 in the cavity 20 through gaps formed between the particles of the particulate thermoplastic resin 6A placed in the suction port 271 and the plurality of the suction gates 272.

When the particulate thermoplastic resin 6A in the main space 201 is melted and therefore the pair of the mold parts 2A and 2B comes close to each other, the particulate thermoplastic resin 6A placed in the standing wall space 202 and the surplus space 203 is melted. At this time, the melted thermoplastic resin 6B in the surplus space 203 is supplied to the standing wall space 202 when the capacity of the surplus space 203 is reduced by a pair of the mold parts 2A and 2B brought close to each other. Further, the excess melted thermoplastic resin 6B in the main space 201 is also supplied to the standing wall space 202.

In this way, a shortage of the thermoplastic resin 6A in the standing wall space 202 can be supplied from the surplus space 203 and the main space 201 when the particulate thermoplastic resin 6A in the standing wall space 202 is melted, and therefore it is possible to avoid a small thickness of the standing wall part 72 formed in the standing wall space 202. Further, when the thermoplastic resin 6A placed in the cavity 20 is melted, the pair of the mold parts 2A and 2B comes close to each other until the bottom surface 221 of the annular fitting recess 22 in the one mold part 2A and the end surface 261 of the annular inner peripheral protrusion 26 in the other mold part 2B abut against each other. Therefore, part of the molded article 7 of the thermoplastic resin 6 formed between the bottom surface 221 of the annular fitting recess 22 and the end surface 261 of the annular inner peripheral protrusion 26 is in the form of a thin sheet (burr).

In this way, in the heating step, the evacuation by the vacuum means 5 is continued until the entire cavity 20 is filled with the melted thermoplastic resin 6B, and therefore the melted thermoplastic resin 6B can spread throughout the cavity 20 having a reduced capacity.

Then, as a cooling step, the cavity 20 between the pair of the mold parts 2A and 2B is kept in a state where the cavity 20 is filled with the melted thermoplastic resin 6B. At this time, the melted thermoplastic resin 6B is cooled and solidified. Then, the main part 71 is formed in the main space 201 and the standing wall part 72 is formed in the standing wall space 202, so that the molded article 7 of the thermoplastic resin 6 is formed.

Then, as a releasing step, the molded article 7 can be released from the pair of the mold parts 2A and 2B.

As described above, the general portion 200 of the pair of the mold parts 2A and 2B of this example is made of silicone rubber, which has a low dielectric power factor. On the other hand, the surface layer 3 has a higher dielectric power factor than the silicone rubber, and contains a dielectric property-imparting substance whose dielectric power factor at 30 °C and 60 Hz is 0.01 or higher.

When the thermoplastic resin 6A in the cavity 20 is irradiated with the specific magnetic waves X from the surface of the mold 2, dielectric heating of the surface layer 3 is effectively performed, and the surface layer 3 is heated by dielectric loss produced in the surface layer 3. Then, the thermoplastic resin 6A in the cavity 20 can be heated and melted by heat conduction from the surface layer 3.

When the thermoplastic resin 6 has a property that its dielectric power factor is increased by heating, the heated thermoplastic resin 6 itself starts to effectively absorb the specific electromagnetic waves X. Therefore, the thermoplastic resin 6 itself generates heat, which makes it possible to more effectively heat the entire thermoplastic resin 6 and therefore to melt the entire thermoplastic resin 6 in a short time.

Therefore, the electromagnetic wave irradiation molding apparatus 1 and the electromagnetic wave irradiation molding method make it possible to stably form the molded article 7 whose thickness greatly changes from part to part, the molded article 7 having a complicated shape, or the like in an excellent appearance and with a high dimensional accuracy.

The use of the electromagnetic wave irradiation molding apparatus 1 and the electromagnetic wave irradiation molding method employing the mold 2 having the surface layer 3 according to this example also makes it possible to obtain the following functions and effects.

The use of the electromagnetic wave irradiation means 4 that emits electromagnetic waves with a wavelength region of 0.01 m to 100 m (microwaves or high-frequency waves) makes it possible to improve heat efficiency for heating the thermoplastic resin 6 in the cavity 20 as compared to a case where the electromagnetic wave irradiation means 4 that emits electromagnetic waves with a wavelength region of 0.78 µm to 2 µm (near-infrared rays) is used. The "heat efficiency" refers to the ratio of the amount of heat used to heat the thermoplastic resin 6 to the amount of heat of electromagnetic waves emitted from the electromagnetic wave irradiation means 4.

In the case of near-infrared rays, the electromagnetic waves are likely to diffuse and are therefore absorbed also by air. Therefore, in this case, the heat efficiency is about 20%. On the other hand, in the case of microwaves or high-frequency waves, the electromagnetic waves are not absorbed by air but absorbed only by a substance whose dielectric power factor is high. Therefore, in this case, the heat efficiency is 60% or higher.

Further, the use of the electromagnetic wave irradiation means 4 that emits microwaves or high-frequency waves makes it possible to increase the flexibility of an irradiation distance from the exit of the electromagnetic wave irradiation means 4, from which the specific electromagnetic waves X are emitted, to the surface of the mold 2 as compared to a case where the electromagnetic wave irradiation means 4 that emits near-infrared rays is used.

In the case of near-infrared rays, the intensity of irradiation attenuates in proportion to the square of the irradiation distance due to influences such as energy diffusion, absorption by air, etc. Therefore, in this case, the irradiation distance cannot be greatly increased. On the other hand, in the case of microwaves or high-frequency waves, the intensity of irradiation is less likely to attenuate, and therefore the irradiation distance can be increased. Further, in this case, the specific electromagnetic waves X easily reach a local area, which makes it easy to form the molded article 7 having a three-dimensional complicated shape.

Further, the use of the electromagnetic wave irradiation means 4 that emits microwaves or high-frequency waves makes it possible to form the molded article 7 of the thermoplastic resin 6 having an increased thickness as compared to a case where the electromagnetic wave irradiation means 4 that emits near-infrared rays is used.

In the case of near-infrared rays, the electromagnetic waves are absorbed only by the surface of the thermoplastic resin 6, and therefore the inner part of the thermoplastic resin 6 is heated only by heat conduction. On the other hand, in the case of microwaves or high-frequency waves, the electromagnetic waves are absorbed not only by the surface of the thermoplastic resin 6 but also by the inner part of the thermoplastic resin 6. That is, the inner part of the thermoplastic resin 6 is heated by the synergy of direct absorption of the electromagnetic waves and heat conduction caused by the electromagnetic waves. Therefore, in this case, even when a certain area of the thermoplastic resin 6 is hidden behind another area of the thermoplastic resin 6, the certain area can be effectively heated by irradiation with the electromagnetic waves.

Further, the use of the electromagnetic wave irradiation means 4 that emits microwaves or high-frequency waves makes it easier for the thermoplastic resin 6 itself to generate heat as compared to a case where the electromagnetic wave irradiation means 4 that emits near-infrared rays is used.

In the case of near-infrared rays, the electromagnetic waves are absorbed only by the surface of the thermoplastic resin 6, and therefore the inner part of the thermoplastic resin 6 is heated only by heat conduction. On the other hand, in the case of microwaves or high-frequency waves, depending on the type of the thermoplastic resin 6, the thermoplastic resin 6 has a property that its dielectric power factor (tan δ) increases as temperature increases. When the thermoplastic resin 6 has such a property, heating to a predetermined temperature is mostly achieved by heat conduction from the surface layer 3, but after the temperature of the thermoplastic resin 6 exceeds the predetermined temperature, heating is mainly performed by self-heating due to an increase in dielectric power factor. Therefore, it is possible to avoid overheating of the mold 2 to increase the lifetime of the mold 2.

Further, the use of the electromagnetic wave irradiation means 4 that emits microwaves or high-frequency waves makes it possible to fix the irradiation direction of the electromagnetic waves.

When the electromagnetic wave irradiation means 4 that emits near-infrared rays is used, a means for moving the electromagnetic wave irradiation means 4 or the mold 2 needs to be provided to irradiate the entire thermoplastic resin 6 with the electromagnetic waves. On the other hand, in the case of microwaves or high-frequency waves, for example, the electromagnetic waves can be irradiated in a state where the mold 2 is placed in a horizontal direction. Therefore, in this case, it is possible to eliminate the need for the means for moving the electromagnetic wave irradiation means 4 or the mold 2 used in the case of near-infrared rays.

Further, the use of the electromagnetic wave irradiation means 4 that emits microwaves or high-frequency waves makes it possible to increase the flexibility of the selection of material of the mold 2.

When the electromagnetic wave irradiation means 4 that emits near-infrared rays is used, the material of the mold 2 needs to have a property of transmitting the electromagnetic waves, because the mold 2 is required to transmit the electromagnetic waves to irradiate the thermoplastic resin 6 with the electromagnetic waves. On the other hand, in the case of microwaves or high-frequency waves, the outer part of the mold 2 may be made of a high stiffness material, such as ceramics (pottery) or wood, in addition to rubber and resin as long as the mold 2 has insulation properties. Therefore, it is possible to avoid the problem of self-weight deformation that may be caused when the molded article 7 to be formed is large.

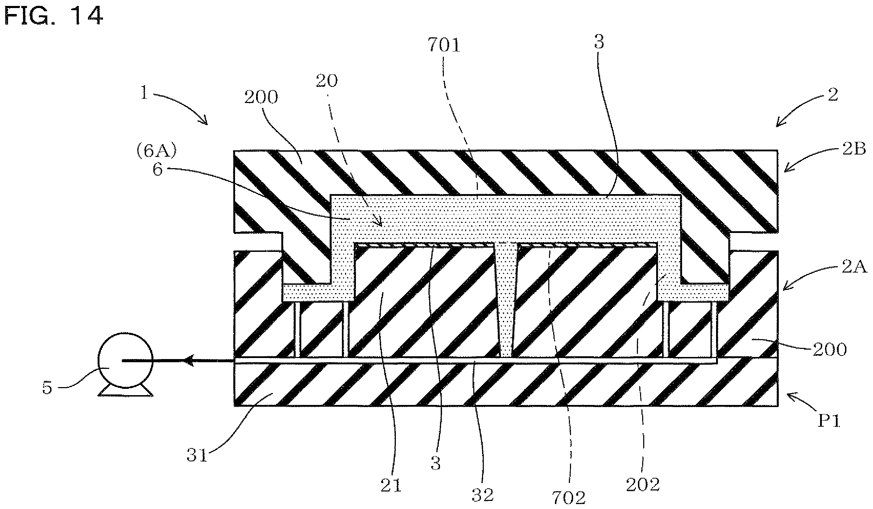

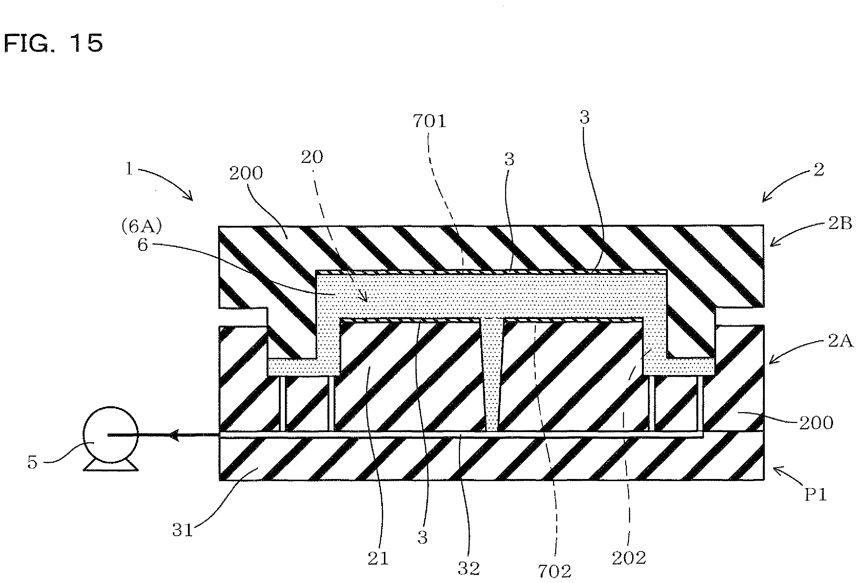

In this example, the surface layer 3 is formed on the inner wall surface of the cavity 20 in the other mold part 2B. Alternatively, as shown in Fig. 14, the surface layer 3 may be formed on the inner wall surface of the cavity 20 in the one mold part 2A. Further alternatively, as shown in Fig. 15, the surface layer 3 may be formed on the inner wall surfaces of the cavity 20 between the one mold part 2A and the other mold part 2B.

Further, the surface layer 3 does not always need to be formed on the inner wall surface of the cavity 20. For example, the inner wall surface of the cavity 20 may have a structure in which the surface layer 3 is formed on the surface of the general portion 200 and a rubber layer made of the same rubber material 209 as the general portion 200 is further formed on the surface of the surface layer 3. In this case, the mold 2 may be easily formed. Further, in this case, the rubber layer shall have such a thickness that heat absorbed by the surface layer 3 is conducted to the thermoplastic resin 6 in the cavity 20. The thickness of the rubber layer may be 20 mm or less, preferably 5 mm or less, more preferably 2 mm or less.

Further, the dielectric property-imparting substance such as silicon carbide may be contained in the entire mold 2. However, in this case, the entire mold 2 may be heated and therefore the mold 2 may be quickly deteriorated. Further, in this case, it may be difficult to efficiently heat the thermoplastic resin 6, and the cooling rate of the thermoplastic resin 6 filled in the cavity 20 of the mold 2 may be reduced. For this reason, as described above, the surface layer 3 is preferably provided partially in the mold 2.

### (Verification test)

In this verification test, in a case where the molded article 7 made of an ABS resin as the thermoplastic resin 6 was formed using the mold 2 constituted from the general portion 200 made of silicone rubber and the surface layer 3 made of silicone rubber containing 25.7 vol% of silicon carbide (SiC), temperature changes in the surface layer 3 and the ABS resin were measured during irradiation with the specific electromagnetic waves X (microwaves) of 2450 MHz (about 0.122 m) by the electromagnetic wave irradiation means 4. The silicon carbide used was NC#1000 (50% average particle diameter (weight basis) : 11 µm) manufactured by Pacific Rundum Co., Ltd. The surface layer 3 had a thickness of 5 mm.

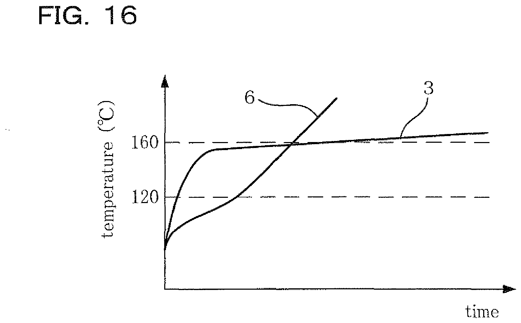

The measured temperature changes are shown in Fig. 16. Fig. 16 shows temperature changes in the surface layer 3 and the ABS resin (thermoplastic resin 6) during heating, in which a horizontal axis represents time and a vertical axis represents temperature.

As shown in Fig. 3, the surface layer 3 was quickly heated to 160°C in about 3 minutes when the output of the electromagnetic wave irradiation means 4 was 500 W. Then, the temperature of the surface layer 3 was balanced with heat release to outside air, and almost reached equilibrium at about 160°C. Further, the surface layer 3 was further quickly heated to 200°C when the output of the electromagnetic wave irradiation means 4 was 1000 W.

The ABS resin was in the form of particulate micropellets having a volume-average particle diameter of 700 µm and a bulk specific gravity of 0.55. In the early stage of heating, the temperature of the ABS resin moderately increased as the temperature of the surface layer 3 increased. This was because the ABS resin was heated by heat conduction from the surface layer 3. Then, in the later stage of heating after the temperature of the ABS resin reached 120°C, the temperature of the ABS resin rapidly increased, and the ABS resin was heated to a temperature exceeding the temperature of the surface layer 3. When the thickness of the surface layer 3 was as thin as 1 mm, it took a long time before the temperature of the ABS resin started to increase.

The reason why the ABS resin was rapidly heated to a temperature exceeding the temperature of the surface layer 3 is considered as follows.

Microwave heating is dielectric heating, and the amount of heat generated by dielectric heating depends on dielectric power factor (tan δ). It is known that the dielectric power factor of the thermoplastic resin 6 such as ABS or vinyl chloride is low at a temperature from room temperature to about 100°C, but increases as its temperature increases. Therefore, it is considered that heat generation of part of the ABS resin in contact with the surface layer 3 was accelerated as the temperature of the part of the ABS resin increased, so that the entire ABS resin was rapidly heated by the synergy of heat conduction and self-heating.

## Claims

1. An electromagnetic wave irradiation molding apparatus comprising:
a mold (2) made of an insulating material; and
electromagnetic wave irradiation means (4) for irradiating specific electromagnetic waves (x) including a wavelength region of 0.01 m to 100 m, wherein:
the mold is separated into a plurality of mold parts (2A, 2B), between which a cavity to be filled with a thermoplastic resin (6) is provided to form a molded article (7); and
a surface layer (3) having a capability to absorb the specific electromagnetic waves (x) is formed on at least a part of an inner wall surface of the cavity (20),
**characterized in that** said apparatus further comprises vacuum means (5) for evacuating an inside of the cavity (20), wherein:
the plurality of the mold parts (2A, 2B) are comprised of a pair of mold parts, one of which, one mold part (2A), has a fitting recess (20A) and the other of which, other mold part (2B), has a fitting protrusion (20B) to be fitted into the fitting recess;
the cavity (20) provided between the pair of the mold parts (2A, 2B) is closed at its entire periphery by the fitting protrusion fitted into the fitting recess (20A); and
the pair of the mold parts (2A, 2B) is configured so as to come close to each other to reduce a capacity of the cavity (20) by allowing the vacuum means (5) to evacuate the inside of the cavity (20) when the thermoplastic resin (6) is melted by irradiation with the specific electromagnetic waves (x) by the electromagnetic wave irradiation means (4), wherein:
a general portion (200) of the plurality of the mold parts (2A, 2B) other than the surface layer (3) is made of silicone rubber or fluoro rubber; and
the surface layer (3) is made of silicone rubber or fluoro rubber containing, as a dielectric property-imparting substance, 5 to 90 vol% of one or more of silicon carbide, ferrite, barium titanate, carbon black, and graphite.

2. The electromagnetic wave irradiation molding apparatus according to claim 1, wherein:
the one mold part (2A) has a vacuum path for connecting the cavity (20) to the vacuum means (5);
the surface layer (3) is formed on the inner wall surface of the cavity (20) in the other mold part (2B); and
the electromagnetic wave irradiation means (4) is configured so as to irradiate the specific electromagnetic waves (x) to an external surface of the other mold part (2B).

3. A method for performing molding using the electromagnetic wave irradiation molding apparatus according to claim 1 or 2, the method comprising the steps of:
placing a thermoplastic resin (6) in the cavity (20);
heating the thermoplastic resin (6) by irradiating the thermoplastic resin (6) placed in the cavity (20) with the specific electromagnetic waves (x) including a wavelength region of 0.01 m to 100 m by the electromagnetic wave irradiation means (4) through the mold (2); and
cooling the thermoplastic resin (6) to obtain a molded article (7).

4. A method for performing molding using the electromagnetic wave irradiation molding apparatus according to claim 1 or 2, the method comprising the steps of:
placing a particulate or solid thermoplastic resin (6) in the cavity (20),
heating the thermoplastic resin (6) by irradiating the thermoplastic resin (6) placed in the cavity (20) with the specific electromagnetic waves (x) including a wavelength region of 0.01 m to 100 m by the electromagnetic wave irradiation means (4) through the mold (2), and
cooling the thermoplastic resin (6) to obtain a molded article (7), wherein
when the heating step is performed after the placing step, the inside of the cavity (20) is evacuated by the vacuum means (5), a pair of the mold parts (2A, 2B) comes close to each other when the thermoplastic resin (6) is melted by irradiation with the specific electromagnetic waves (x) by the electromagnetic wave irradiation means (4), and a molded article (7) of the thermoplastic resin (6) is formed in the cavity (20) having a reduced capacity.

## Patentansprüche

1. Elektromagnetwellen-Bestrahlungsformvorrichtung, mit:
einer Form (2) aus einem isolierenden Material; und
einem Elektromagnetwellen-Bestrahlungsmittel (4) zum Ausstrahlen spezifischer elektromagnetischer Wellen (x), die einen Wellenlängenbereich von 0,01 m bis 100 m aufweisen, wobei:
die Form in eine Mehrzahl von Formteilen (2A, 2B) unterteilt ist, zwischen denen ein Hohlraum, der mit einem thermoplastischen Harz (6) zu füllen ist, vorgesehen ist zum Bilden eines geformten Artikels (7); und
wobei eine Oberflächenschicht (3) mit einer Fähigkeit zum Absorbieren der spezifischen elektromagnetischen Wellen (x) auf mindestens einem Teil einer Innenwandfläche des Hohlraums (20) gebildet ist, **dadurch gekennzeichnet, dass** die Vorrichtung ferner ein Vakuummittel (5) aufweist zum Evakuieren eines Inneren des Hohlraums (20), wobei:
die Mehrzahl der Formteile (2A, 2B) aus einem Paar von Formteilen besteht, von dem ein Formteil (2A) eine Passvertiefung (20A) aufweist, und von dem das andere Formteil (2B), einen Passvorsprung (20B) aufweist, der in die Passvertiefung passt;
der Hohlraum (20), der zwischen dem Paar von Formteilen (2A, 2B) vorgesehen ist, an seinem gesamten Umfang durch den in die Passvertiefung (20A) passenden Passvorsprung verschlossen ist; und
das Paar von Formteilen (2A, 2B) konfiguriert ist nahe zusammenzukommen, um eine Kapazität des Hohlraums (20) zu reduzieren, indem dem Vakuummittel (5) erlaubt wird, das Innere des Hohlraums (20) zu evakuieren, wenn das thermoplastische Harz (6) durch Bestrahlung mit den spezifischen elektromagnetischen Wellen (x) durch das Elektromagnetwellen-Bestrahlungsmittel (4) geschmolzen ist, wobei:
ein allgemeiner Bereich (200) von der Mehrzahl von Formteilen (2A, 2B), der ein anderer ist als die Oberflächenschicht (3), aus Silikongummi oder Fluorogummi gebildet ist; und
die Oberflächenschicht (3) aus Silikongummi oder Fluorogummi gebildet ist, mit 5 bis 90 Vol.-% Siliziumcarbid, Ferrit, Bariumtitanat, Ruß und/oder Graphit als eine dielektrische Eigenschaft verleihende Substanz.

2. Elektromagnetwellen-Bestrahlungsformvorrichtung nach Anspruch 1, bei der:
das eine Formteil (2A) einen Vakuumpfad aufweist zum Verbinden des Hohlraums (20) mit dem Vakuummittel (5);
die Oberflächenschicht (3) auf der Innenwandfläche des Hohlraums (20) in dem anderen Formteil (2B) gebildet ist; und
das Elektromagnetwellen-Bestrahlungsmittel (4) konfiguriert ist zum Ausstrahlen der spezifischen elektromagnetischen Wellen (x) auf eine äußere Fläche des anderen Formteils (2B).

3. Verfahren zum Durchführen eines Formens unter Verwendung der Elektromagnetwellen-Bestrahlungsformvorrichtung nach Anspruch 1 oder 2, wobei das Verfahren die Schritte aufweist:
Platzieren eines thermoplastischen Harzes (6) in dem Hohlraum (20);
Erhitzen des thermoplastischen Harzes (6) durch Bestrahlen des thermoplastischen Harzes (6), das in dem Hohlraum (20) platziert ist, mit den spezifischen elektromagnetischen Wellen (x), die einen Wellenlängenbereich von 0,01 m bis 100 m aufweisen, durch das Elektromagnetwellen-Strahlungsmittel (4) durch die Form (2) hindurch; und
Kühlen des thermoplastischen Harzes (6), um einen geformten Artikel (7) zu bekommen.

4. Verfahren zum Durchführen des Formens unter Verwendung der Elektromagnetwellen-Bestrahlungsformvorrichtung nach Anspruch 1 oder 2, wobei das Verfahren die Schritte aufweist:
Platzieren eines partikelförmigen thermoplastischen Harzes (6) oder thermoplastischen Festkörperharzes (6) in dem Hohlraum (20);
Erhitzen des thermoplastischen Harzes (6) durch Bestrahlen des thermoplastischen Harzes (6), das in dem Hohlraum (20) platziert ist, mit den spezifischen elektromagnetischen Wellen (x), die einen Wellenlängenbereich von 0,01 m bis 100 m aufweisen, durch das Elektromagnetwellen-Bestrahlungsmittel (4) durch die Form (2) hindurch, und
Kühlen des thermoplastischen Harzes (6), um einen geformten Artikel (7) zu bekommen, wobei
wenn der Erhitzungsschritt nach dem Platzierungsschritt durchgeführt wird, das Innere des Hohlraums (20) durch das Vakuummittel (5) evakuiert wird, ein Paar von Formteilen (2A, 2B) nahe zusammenkommt, wenn das thermoplastische Harz (6) durch Bestrahlung mit den spezifischen elektromagnetischen Wellenlängen (x) durch das Elektromagnetwellen-Bestrahlungsmittel (4) geschmolzen wird, und der geformte Artikel (7) aus dem thermoplastischen Harz (6) in dem Hohlraum (20), der eine reduzierte Kapazität aufweist, gebildet wird.

## Revendications

1. Appareil de moulage par irradiation par ondes électromagnétiques comprenant :
un moule (2) fait d'une matière isolante ; et
des moyens d'irradiation par ondes électromagnétiques (4) pour irradier des ondes électromagnétiques spécifiques (x) comprenant une région de longueur d'onde de 0,01 m à 100 m, dans lesquels :
le moule est séparé en une pluralité de parties de moule (2A, 2B), entre lesquelles une empreinte à remplir avec une résine thermoplastique (6) est prévue pour former un article moulé (7) ; et
une couche de surface (3) ayant la capacité d'absorber les ondes électromagnétiques spécifiques (x) est formée sur au moins une partie de la surface de la paroi intérieure de l'empreinte (20),
**caractérisé en ce que** ledit appareil comprend en outre des moyens de vide (5) pour évacuer un intérieur de l'empreinte (20), dans lequel :
la pluralité des parties de moule (2A, 2B) sont constituées d'une paire de parties de moule, dont l'une, une partie de moule (2A) a un évidement d'ajustement (20A) et dont l'autre, une autre partie de moule (2B) a une saillie d'ajustement (20B) à ajuster dans l'évidement d'ajustement ;
l'empreinte (20) prévue entre la paire de parties de moule (2A, 2B) est fermée sur toute sa périphérie par la saillie d'ajustement ajustée dans l'évidement d'ajustement (20A) ;
et
la paire des parties de moule (2A, 2B) est configurée de manière à se rapprocher l'une de l'autre pour réduire la capacité de l'empreinte (20) en permettant aux moyens de vide (5) d'évacuer l'intérieur de l'empreinte (20) lorsque la résine thermoplastique (6) est fondue par irradiation avec les ondes électromagnétiques spécifiques (x) par les moyens d'irradiation par ondes électromagnétiques (4), dans lequel :
une portion générale (200) de la pluralité des parties de moule (2A, 2B) autres que la couche de surface (3) est constituée de caoutchouc de silicone ou de caoutchouc fluoré ; et
la couche de surface (3) est constituée de caoutchouc de silicone ou de caoutchouc fluoré contenant, comme substance conférant des propriétés diélectriques, 5 à 90 % en volume d'un ou plusieurs des éléments suivants : carbure de silicium, ferrite, titanate de baryum, noir de carbone et graphite.

2. Appareil de moulage par irradiation par ondes électromagnétiques selon la revendication 1, dans lequel :
la partie de moule (2A) possède un chemin de vide pour relier l'empreinte (20) aux moyens de vide (5) ;
la couche de surface (3) est formée sur la surface de la paroi intérieure de l'empreinte (20) dans l'autre partie de moule (2B) ; et
les moyens d'irradiation par ondes électromagnétiques (4) est configuré de manière à irradier les ondes électromagnétiques spécifiques (x) sur une surface externe de l'autre partie de moule (2B).

3. Procédé pour effectuer un moulage en utilisant l'appareil de moulage par irradiation par ondes électromagnétiques selon la revendication 1 ou 2, le procédé comprenant les étapes suivantes consistant à :
placer une résine thermoplastique (6) dans l'empreinte (20) ;
chauffer la résine thermoplastique (6) en irradiant la résine thermoplastique (6) placée dans l'empreinte (20) avec les ondes électromagnétiques spécifiques (x) comprenant une région de longueur d'onde de 0,01 m à 100 m par les moyens d'irradiation par ondes électromagnétiques (4) à travers le moule (2) ; et
refroidir la résine thermoplastique (6) pour obtenir un article moulé (7).

4. Procédé pour effectuer un moulage en utilisant l'appareil de moulage par irradiation par ondes électromagnétiques selon la revendication 1 ou 2, le procédé comprenant les étapes consistant à :
placer une résine thermoplastique particulaire ou solide (6) dans l'empreinte (20),
chauffer la résine thermoplastique (6) par irradiation de la résine thermoplastique (6) placée dans l'empreinte (20) avec les ondes électromagnétiques spécifiques (x) comprenant une région de longueur d'onde de 0,01 m à 100 m par les moyens d'irradiation par ondes électromagnétiques (4) à travers le moule (2), et
refroidir la résine thermoplastique (6) pour obtenir un article moulé (7), dans lequel
lorsque l'étape de chauffage est effectuée après l'étape de mise en place, l'intérieur de l'empreinte (20) est évacué par les moyens de vide (5), une paire du parties de moule (2A, 2B) se rapproche l'une de l'autre lorsque la résine thermoplastique (6) est fondue par irradiation avec les ondes électromagnétiques spécifiques (x) par les moyens d'irradiation par ondes électromagnétiques (4), et un article moulé (7) de la résine thermoplastique (6) est formé dans l'empreinte (20) ayant une capacité réduite.
